(19) Europäisches Patentamt

European Patent Office

Office européen des brevets

(11) **EP 1 237 760 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(21) Anmeldenummer: **99966885.8**

(22) Anmeldetag: **16.12.1999**

(51) Int Cl.⁷: **B60R 21/01**

(86) Internationale Anmeldenummer:
**PCT/DE1999/004012**

(87) Internationale Veröffentlichungsnummer:
**WO 2001/044020 (21.06.2001 Gazette 2001/25)**

(54) **VERFAHREN UND VORRICHTUNG ZUM BESTIMMEN DES ABSOLUTDREHWINKELS EINES SICH UM EINE ETWA WAAGERECHTE DREHACHSE DREHENDEN GEGENSTANDES**

METHOD AND DEVICE FOR DETERMINING THE ABSOLUTE ANGLE OF ROTATION OF AN OBJECT THAT IS ROTATING AROUND AN APPROXIMATELY HORIZONTAL ROTATIONAL AXIS

PROCEDE ET DISPOSITIF POUR DETERMINER L'ANGLE DE ROTATION ABSOLU D'UN OBJET TOURNANT AUTOUR D'UN AXE DE ROTATION APPROXIMATIVEMENT HORIZONTAL

(84) Benannte Vertragsstaaten:
**DE FR GB IT**

(43) Veröffentlichungstag der Anmeldung:
**11.09.2002 Patentblatt 2002/37**

(73) Patentinhaber: **SIEMENS AKTIENGESELLSCHAFT**
**80333 München (DE)**

(72) Erfinder:
• **GLASER, Telmo**
**D-93051 Regensburg (DE)**
• **WOLF, Florian**
**D-93047 Regensburg (DE)**

(56) Entgegenhaltungen:
**EP-A- 0 430 813**          **EP-A- 0 934 855**
**WO-A-99/17962**          **US-A- 5 610 575**

**Beschreibung**

Die Erfindung betrifft ein Verfahren und eine Vorrichtung zum Bestimmen des Absolutdrehwinkels eines sich um eine etwa waagerechte Drehachse drehenden Gegenstandes, insbesondere eines sich um seine Längsachse drehenden Kraftfahrzeugs.

In modernen Insassenschutzsystemen für Kraftfahrzeuge stellt sich die Aufgabe, bei einem Überschlag um die Längsachse den Absolutdrehwinkel des Fahrzeugs zu kennen, damit eine zeitrichtige Zündentscheidung von Rückhaltemitteln oder anderen Schutzmitteln getroffen werden kann.

Aus der gattungsbildenden EP 0 430 813 B1 ist ein Sicherheitssystem für Kraftfahrzeuge bekannt, welches mit vier Sensoren arbeitet. Ein Drehratensensor erfaßt die Winkelgeschwindigkeit der Drehung des Fahrzeugs um seine Längsachse. Drei Beschleunigungssensoren erfassen die Längsbeschleunigung, die Querbeschleunigung und die senkrechte Beschleunigung des Fahrzeugs. Das Ausgangssignal des Drehratensensors wird integriert und, sofern es über einem Schwellwert liegt, einem ODER-Glied zugeführt, so daß eine pyrotechnische Zündeinrichtung ausgelöst wird. Die Integration des Ausgangssignals des Drehratensensors erfolgt nicht ständig, sondern nur während eines Zeitfensters, das durch die Ausgangssignale der Beschleunigungssensoren bestimmt wird.

Aus der EP 0 934 855 A1 sind ein Verfahren und eine Vorrichtung zum Auslösen eines Überrollschutzmittels bekannt, bei dem in einem ersten Schritt longitudinale, laterale und vertikale Fahrzeugbeschleunigungen sowie Überroll- und Nickgeschwindigkeit - geliefert von entsprechenden Sensoren - einer zeitlichen Mittelwertbildung unterzogen werden. Die zeitlich gemittelten Signale werden einem erweiterten Kalman-Filter unterzogen. Ausgangsgrößen des Kalman-Filters ist der gegenwärtige Überrollwinkel sowie der gegenwärtige Nickwinkel des Fahrzeugs. Zur Berechnung jeder dieser Größen ist das Ausschöpfen aller fünf Eingangsgrößen erforderlich.

Der Erfindung liegt die Aufgabe zugrunde, ein Verfahren und eine Vorrichtung zum Bestimmen des Absolutdrehwinkels eines sich um eine etwa waagerechte Drehachse drehenden Gegenstandes, insbesondere eines sich um seine Längsachse drehenden Kraftfahrzeuges, zu schaffen, mit dem bzw. der bei einfacher Durchführbarkeit bzw. einfachem Aufbau der Absolutdrehwinkel rasch und genau bestimmt werden kann.

Der auf das Verfahren gerichtete Teil der Erfindungsaufgabe wird mit den Merkmalen des Anspruchs 1 gelöst.

Erfindungsgemäß werden die durch Schwerkraft bedingte Änderung der Beschleunigung in Richtung der Hochachse des Fahrzeugs sowie der Winkel, um den das Fahrzeug um seine Längsachse dreht, innerhalb eines Zeitintervalls bestimmt. Aus beiden Informationen kann der Absolutdrehwinkel des Fahrzeugs, d.h. dessen absolute Drehstellung, errechnet werden. Dadurch, daß nur Differenzen von Signalen betrachtet werden, sind keine absoluten Sensorwerte entscheidend, so daß keine teuren, hochgradig stabilen Beschleunigungssensoren verwendet werden müssen, sondern in ihrem Aufbau einfache Sensoren eingesetzt werden können.

Der Anspruch 2 ist auf eine vorteilhafte Durchführungsform des erfindungsgemäßen Verfahrens gerichtet.

Der Anspruch 3 kennzeichnet den grundsätzlichen Aufbau einer Vorrichtung zur Lösung des diesbezüglichen Teils der Erfindungsaufgabe.

Mit den Merkmalen der Ansprüche 4 und 5 ist es in einfacher Weise möglich, Nullpunktsverschiebungen der Sensoren nachzuführen.

Der Anspruch 6 kennzeichnet ein vorteilhaftes Beispiel der Funktion einer Recheneinheit.

Der Anspruch 7 ist auf einen vorteilhaften Ablauf der in der Recheneinheit durchgeführten Rechnungen gerichtet.

Die Erfindung ist überall dort vorteilhaft anwendbar, wo es darauf ankommt, die absolute Winkelstellung eines sich in einem Schwerkraftfeld um eine zur Schwerkraftrichtung geneigte Drehachse drehenden Gegenstandes zu bestimmen. Die Erfindung macht sich zunutze, daß die Schwerkraftkomponente bzw. Beschleunigungskomponente in Richtung einer sich bei der Drehung relativ zur Richtung der Schwerkraft drehenden, gegenstandsfesten Achse sich in einer Sinus- bzw. Kosinusfunktion ändert, so daß aus der Änderung der Schwerkraftkomponente und dem Drehwinkel des Gegenstandes auf dessen Absolutdrehwinkel bzw. dessen Drehstellung in einem ortsfesten Koordinatensystem geschlossen werden kann. Die Erfindung eignet sich insbesondere zur Verwendung in Kraftfahrzeugen, um dort Sicherheitseinrichtungen, die vor den Folgen eines Überschlags schützen, zweckentsprechend auszulösen.

Die Erfindung wird im Folgenden anhand schematischer Zeichnungen beispielsweise und in weiteren Einzelheiten erläutert.

Es stellen dar:

Fig. 1    ein Kraftfahrzeug mit darin angeordneten Sensoren,

Fig. 2    das physikalische Grundprinzip eines Drehratensensors,

Fig. 3    das physikalische Grundprinzip eines Beschleunigungssensors zum Erfassen der in Richtung der Hochachse des Gegenstandes wirkenden, von dem Absolutdrehwinkel des Gegenstandes abhängigen Beschleunigungskomponente,

Fig. 4  ein Blockschaltbild einer erfindungsgemäßen Vorrichtung,

Fig. 5  Kurven zur Erläuterung der Absolutdrehwinkelberechnung und

Fig. 6  Kurven zur Erläuterung der Genauigkeit der erfindungsgemäß durchgeführten Berechnung.

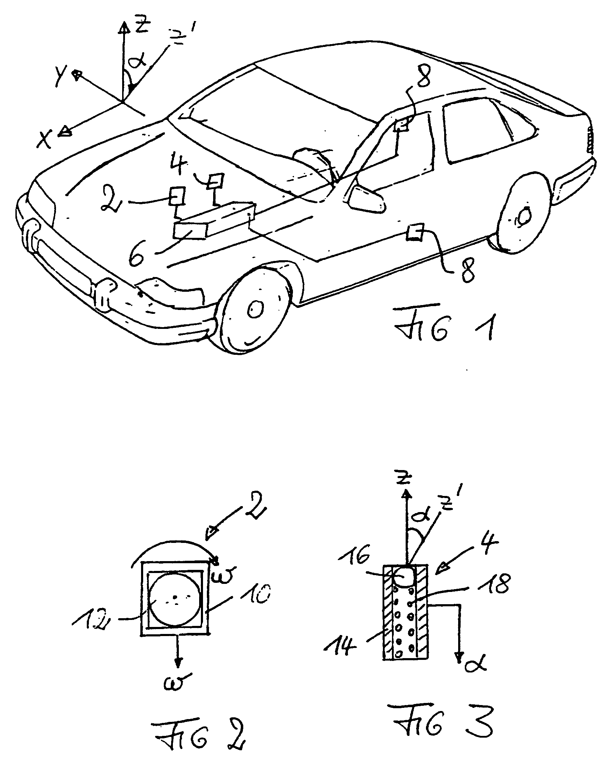

Gemäß Fig. 1 sind in einem Kraftfahrzeug ein Drehratensensor 2 und ein Beschleunigungssensor 4 angebracht, die mit einem Steuergerät 6 verbunden sind, das wiederum mit Insassenschutzeinrichtungen 8 verbunden ist, beispielsweise Gurtstraffern, Kopf-Airbags oder auch, insbesondere bei Cabrios, aus dem Sitzrahmen oder Karosserieteilen ausfahrbaren Überrollbügel, usw. Im weiteren wird das System in seiner Wirksamkeit bei Überschlägen bzw. bei einem Überrollen erläutert, bei dem sich das Fahrzeug um seine Längsachse x dreht. In der Stellung z der Hochachse des Fahrzeugs (Normalstellung des Fahrzeugs auf waagerechtem Grund) stimmt die Hochachse z des Fahrzeugs mit der ortsfesten Senkrechten überein. Nach einer Drehung um die Längsachse um den Winkel $\alpha$ bildet die Hochachse z' des Fahrzeugs mit der ortsfesten senkrechten Richtung einen Winkel $\alpha$, der im Folgenden als Absolutdrehwinkel bezeichnet ist.

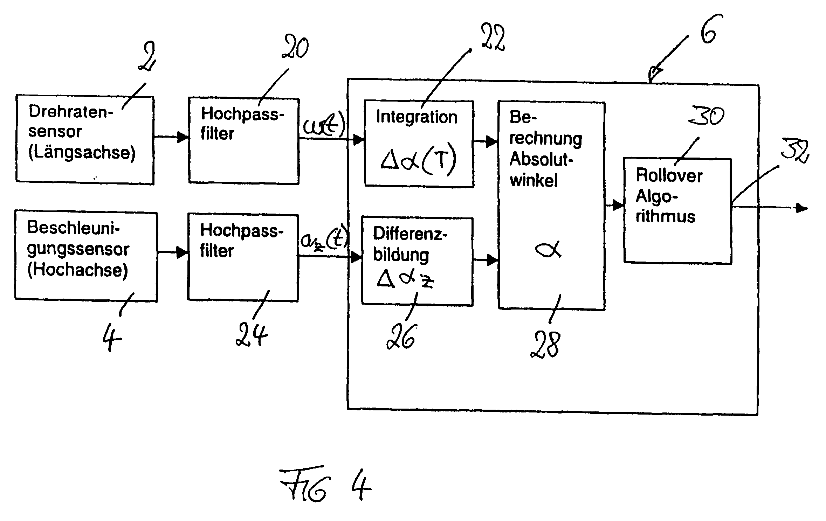

Fig. 2 deutet das physikalische Grundprinzip eines Drehratensensors an: innerhalb eines Gehäuses 10 befindet sich ein Trägheitskörper 12, beispielsweise eine Kugel. Wenn das mit dem Kraftfahrzeug verbundene Gehäuse 10 sich plötzlich mit der Drehrate bzw. Drehwinkelgeschwindigkeit $\omega$ dreht, bleibt der Trägheitskörper 12 in Ruhe, so daß die Relativdrehung zwischen dem Trägheitskörper 12 und dem Gehäuse 10 erfaßt werden kann und als Drehratenproportionales Ausgangssignal $\omega$ beispielsweise in Form von Impulsen je Zeiteinheit ausgegeben wird, wobei jedem Impuls eine Drehung um einen vorbestimmten Winkelbetrag entspricht.

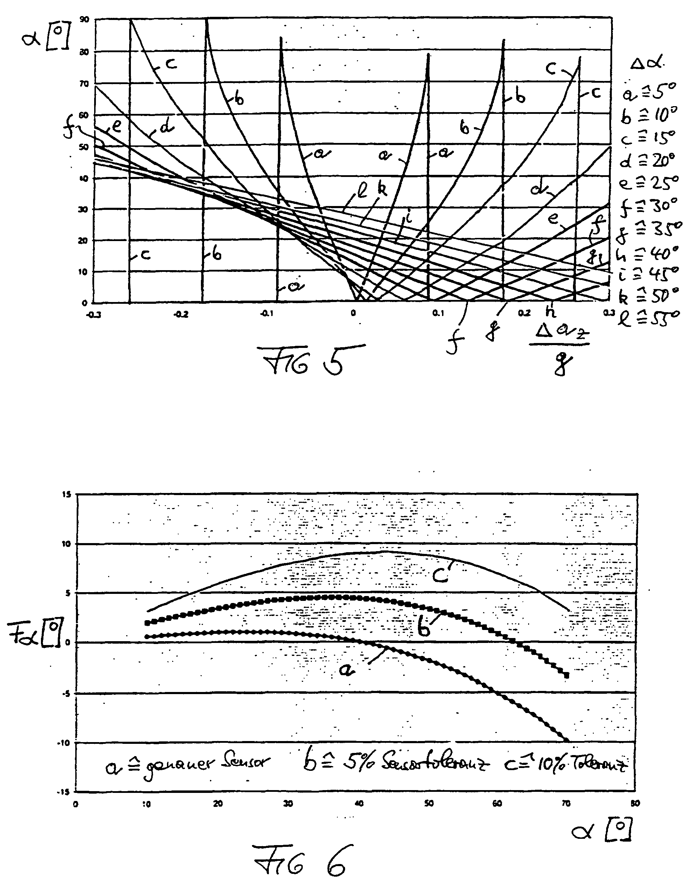

Fig. 3 zeigt das Grundprinzip eines Beschleunigungssensors 4. Innerhalb eines Gehäuses 14 ist ein Massenkörper 16 angeordnet, der von einer Feder 18 gemäß Fig. 3 nach oben gedrückt wird. In der dargestellten Senkrechtstellung des Gehäuses 14 wirkt der Federkraft die gesamte Erdbeschleunigung bzw. das Gewicht des Massenkörpers 16 entgegen. Wenn das Gehäuse 14 um dem Winkel $\alpha$ aus der Senkrechten verdreht wird, wird der Kraft der Feder 18 die Schwerkraft nur noch mit einer Komponente $m \cdot g \cdot \cos\alpha$ entgegen, wobei m die Masse des Massenkörpers 16 ist, g die Endbeschleunigung und $\alpha$ der Absolutdrehwinkel. Durch Erfassung der in Richtung der Beweglichkeit des Massenkörpers 16 wirksamen Kraft kann somit ein Ausgangssignal erzeugt werden, das dem Absolutdrehwinkel $\alpha$ proportional ist. Durch entsprechende Bedämpfung der Bewegbarkeit des Massenkörpers 16 läßt sich der Beschleunigungssensor 4 derart bauen, daß im wesentlichen nur die Absolutdrehstellung $\alpha$ erfaßt wird und Beschleunigungen des Fahrzeugs selbst, die beispielsweise beim Überfahren von Hindernissen usw. auftreten, weitgehend unterdrückt werden. Es versteht sich, daß solche Beschleunigungsspitzen auch durch entsprechende Filterung des Ausgangssignals unterdrückt werden können.

Fig. 4 zeigt ein Blockschaltbild der erfindungsgemäßen Vorrichtung.

Der Drehratensensor 2 ist über ein Hochpaßfilter 20 mit einem Integrator 22 verbunden. Der Beschleunigungssensor 4 ist über ein Hochpaßfilter 24 mit einem Differenzglied 26 verbunden.

Der Integrator 22 und das Differenzglied 26 sind mit einer Recheneinheit 28 verbunden, deren Ausgangssignal einer Einheit 30 zugeführt wird, die entsprechend in ihr vorgespeicherten Algorithmen unter Auswertung ggf. weiterer Eingangssignale bestimmt, ob an ihrem Ausgang 32 ein Ausgangssignal zum Auslösen entsprechender Insassenschutzeinrichtungen erzeugt wird. Es versteht sich, daß in der Einheit 30 mehrere Algorithmen gespeichert sein können und die Einheit 30 mehrere Ausgangssignale erzeugen kann, mit denen einzelne Sicherheitseinrichtungen individuell ausgelöst werden können. Die Sicherheitseinrichtungen können gezündet, magnetisch ausgelöst oder sonstwie aktiviert werden.

Die Einheiten 22, 26, 28 und 30 sind vorteilhafterweise in de Steuergerät 6 untergebracht, das ggf. auch die Filter 20 und 24 aufnehmen kann, die alternativ auch unmittelbar in die Sensoren 2 und 4 integriert sein können.

Der Aufbau des Mikroprozessor-gesteuerten Steuergerätes 6 ist an sich bekannt und wird daher nicht erläutert.

Im Folgenden wird die Funktion der Vorrichtung gemäß Fig. 4 anhand der von den Sensoren erfaßten Größen und deren weiterem Verarbeitung unter zeitlicher Steuerung des nicht dargestellten Mikroprozessors erläutert:

A. Vom Drehratensensor 2 wird die zeitabhängige Winkelgeschwindigkeit $\omega(t)$ der zeitabhängigen Drehung des Fahrzeugs um seine Längsachse bestimmt. Nach Filterung des Ausgangssignals des Drehratensensors 2 im Hochpaßfilter 20 steht ein von Nullpunktdriften des Drehratensensors 2 weitgehend freies Ausgangssignal $\omega(t)$ zur Verfügung.

Ähnlich wird vom Beschleunigungssensor 4 ein dem Absolutdrehwinkel $\alpha$ entsprechendes, jedoch recht ungenaues Signal erzeugt, das nach seiner Hochpaßfilterung als zeitabhängige, in Richtung der Hochachse des Fahrzeugs wirkende Beschleunigung $a_z(t)$ zur Verfügung steht.

B. In dem Integrator 22 wird die Änderung des Drehwinkels innerhalb des Zeitintervals T bestimmt zu:

$$\Delta\alpha(T) = \int_0^T \omega(t)\,dt.$$

Alternativ kann der Integrator unmittelbar von dem Drehratensensor während eines Zeitintervalls gesendete Impulse zählen, so daß ein dem Drehwinkel während des Zeitintervalls entsprechender Wert zur Verfügung steht, sofern jedem Impuls ein vorbestimmter Drehwinkel entspricht und je nach Drehrichtung aufwärts oder abwärts gezählt wird.

In dem Differenzglied 26 wird die Änderung der Beschleunigungskomponente $a_z$ innerhalb des Zeitintervalls T berechnet zu:

$$\Delta a_z(T) = a_z(T) - a_z(0)$$

Durch diese Differenzbildung werden Nullpunktschwankungen und Drifts des Beschleunigungssensors 4 weitgehend ausgeglichen.

C. Wenn $\Delta\alpha$ kleiner ist als eine Konstante C1 oder $\Delta a_z$ größer ist als eine Konstante C2, bedeutet dies, daß die Signale nicht zur nachfolgenden Berechnung des Absolutdrehwinkels geeignet sind, da die Winkeldrehung zu klein war oder die Änderung der Beschleunigungskomponente zu groß war, was auf externe Störungen schließen läßt, so daß das System zur oben genannten Stufe A zurückkehrt. Wenn die beiden genannten Bedingungen nicht erfüllt sind, geht das System zur nächsten Stufe D·über.

D. Es wird der Absolutwert unter Verwendung folgender Formeln berechnet:

$$\alpha = m \cdot(\Delta a_z - \Delta a_z^{\,0}),$$

wobei
$m = C3/\Delta\alpha,\ \Delta a_z^{\,0} = 1 - \cos(\Delta\alpha)$

Die vorstehenden Schritte werden jeweils mit aktualisierten Daten wiederholt, wobei Offsets der Sensoren kompensiert sind. Wenn der Winkel $\alpha$ sich beispielsweise um 10° ändert und die Beschleunigung in z-Richtung sich um 0,1 g ändert, wird der Absolutwert von $\alpha$ mit 29,5° bestimmt. Die genaue Berechnung würde 30° ergeben. Der nach dem vorstehenden Verfahren berechnete Wert des Absolutdrehwinkels $\alpha$ wird der Einheit 30 zugeführt und steht dort als ausreichend genauer Wert des Absolutdrehwinkels $\alpha$, der die Drehstellung des Fahrzeugs relativ zur senkrechten angibt, für die weitere Auswertung zur Verfügung.

Im Folgenden werden die in den obigen Schritten genannten Formeln hergeleitet:

Wie anhand der Fig. 3 erläutert, beträgt $a_z = g \cdot \cos\alpha$. Daraus ergibt sich, daß

$$\Delta a_z = g \cdot (\cos\alpha - \cos\alpha_0) \text{ und } \alpha - \alpha_0 = \Delta\alpha = \int \omega\,dt.$$

Die Kombination der vorgenannten Formeln ergibt:

$$\cos\alpha = \frac{\Delta a_z}{g} + \cos(\alpha - \Delta\alpha) \tag{1}$$

Die Auflösung der Formel 1 nach $\alpha$ ergibt:

$$\alpha = \pm Arc\cos\left[\pm \frac{1}{4\cdot(Sin(\Delta\alpha/2))^2}\cdot\left(\pm\Delta a_z \mp \Delta a_z \cdot Cos(\Delta\alpha) + \sqrt{(2-\Delta a_z^2 - 2\cdot Cos(\Delta\alpha))\cdot(Sin(\Delta\alpha))^2}\right)\right]$$

Wenn der Absolutdrehwinkel auf das Intervall von -90° bis +90° beschränkt wird, ergibt sich das Bild der Fig. 5:

Im Diagramm der Fig. 5 zeigen die Kurven den Absolutdrehwinkel $\alpha$ in Abhängigkeit von $\Delta a_z/g$ für verschiedene Werte von $\Delta\alpha$ als Parameter an.

Wie ersichtlich, kann für $\Delta a_z$ nahe dem Nullpunkt $\Delta a_z^0$ oder große Werte von $\Delta\alpha$ eine lineare Approximation vorgenommen werden. $\Delta a_z^0$ kann mit der Formel 1 berechnet werden und beträgt:

$$\Delta a_z^0 = 1\text{-}\cos\Delta\alpha. \tag{2}$$

(Es sei darauf hingewiesen, daß diese Formel gut durch eine Parabel angenähert werden kann, wenn die Berechnung der Cosinus- Funktion aufgrund geringer Rechenkapazität des Systems nicht möglich ist.)

Die Steigung nahe dem Nullpunkt kann ebenfalls berechnet werden:

$$\left.\frac{\partial\alpha}{\partial\Delta a_z}\right|_{\Delta a_z^0} = \frac{\sqrt{1-\cos(2\cdot\Delta\alpha)+2(\sin(\Delta\alpha))^2}}{2(\sin(\Delta\alpha))^2}$$

Eine gute Annäherung ist eine Hyperbel mit:

$$\left.\frac{\partial\alpha}{\partial\Delta a_z}\right|_{\Delta a_z^0} \approx \frac{3477\deg^2/g}{\Delta\alpha}$$

Zusammenfassend ergibt sich aus dem Vorstehenden, daß der Absolutdrehwinkel $\alpha$ mit hoher Genauigkeit und begrenzter Rechenkapazität aus den Ausgangssignalen der beiden Sensoren 2 und 4 (Fig. 4) errechnet werden kann.

Fehlerbetrachtung;

Die Messung der Eingangsgrößen $\Delta\alpha$ und $\Delta_z$ kann nur innerhalb einer bestimmten Fehlerbandbreite erfolgen. Beispielsweise habe der Drehratensensor ein Toleranzband von $\pm$ 5%. Des weiteren kann selbst ein idealer Beschleunigungssensor zur Erfassung von Beschleunigungen in z-Richtung theoretisch nicht zwischen externen Beschleunigungen und der Schwerkraft unterscheiden. Eine Unterscheidung ist jedoch mit Hilfe eines Algorithmus, der beispielsweise die Stabilität des Beschleunigungssignals über die Zeit überwacht und ggf. mit anderen Größen korreliert, möglich. Auf diese Fehlerquelle muß jedoch geachtet werden.

Die Kurven der Fig. 6 zeigen den Fehler F$\alpha$ des Absolutdrehwinkels $\alpha$ in Grad in Abhängigkeit vom Absolutdrehwinkel $\alpha$ für verschiedene Sensortoleranzen. Für die Darstellung wurde eine Winkeländerung von 10° angenommen. Wenn die Berechnung bei einem anfänglichen Absolutdrehwinkel von 50° beginnt und bei einem Absolutdrehwinkel von 60° endet, dann würde die Annäherung bei perfekten Sensoren zum Ergebnis von 55° (anstelle von 60°) führen. Eine 5%-ige Ungenauigkeit beider Sensoren würde zu 61° führen und ein 10%-iger Fehler würde zu einem Absolutdrehwinkel von 67° führen.

Es versteht sich, daß das beschriebene System in vielfältiger Weise abgeändert werden kann. Beispielsweise kann der fahrzeugfeste Beschleunigungssensor auch anders ausgerichtet sein als parallel zur Hochachse des Fahrzeugs.

# EP 1 237 760 B1

**Patentansprüche**

1. Verfahren zum Bestimmen des Absolutdrehwinkels eines sich um eine etwa waagerechte Drehachse drehenden Gegenstandes, insbesondere eines sich um seine Längsachse drehenden Kraftfahrzeugs,
bei welchem Verfahren eine während eines Zeitintervalls erfolgende Drehwinkeländerung ($\Delta\alpha$) des Gegenstandes bestimmt wird und die in Richtung der Hochachse des Gegenstandes wirkende Beschleunigungskomponente ($a_z$) bestimmt wird,
**dadurch gekennzeichnet,**
**daß** die während des Zeitintervalls erfolgende Änderung ($\Delta a_z$) der in Richtung der Hochachse des Gegenstandes wirkenden Beschleunigungskomponente bestimmt wird und
**daß** der Absolutdrehwinkel ($\alpha$) des Gegenstandes aus der Drehwinkeländerung ($\Delta\alpha$) und lediglich der Änderung ($\Delta a_z$) der in Richtung der Hochachse des Gegenstandes wirkenden Beschleunigungskomponente berechnet wird.

2. Verfahren nach Anspruch 1, **dadurch gekennzeichnet, daß** zur Bereichnung des Absolutdrehwinkels ($\alpha$) folgende Formeln verwendet werden:

$$\alpha = m \cdot (\Delta a_z - \Delta a_z^{\,0}),$$

wobei m = C3/$\Delta\alpha$, $\Delta a_z^{\,0}$ = 1-cos($\Delta\alpha$) und
C3 eine Konstante ist.

3. Vorrichtung zum Bestimmen des Absolutdrehwinkels eines sich um eine etwa waagerechte Drehachse drehenden Gegenstandes, insbesondere eines sich um seine Längsachse drehenden Kraftfahrzeugs, enthaltend
einen Drehratensensor (2) zum Erfassen der Winkelgeschwindigkeit ($\omega$) des sich um die Drehachse drehenden Gegenstandes, einen Integrator (22) zum Integrieren der Winkelgeschwindigkeit und Bestimmen einer Drehwinkeländerung ($\Delta\alpha$),
einen Beschleunigungssensor (4) zum Erfassen der in Richtung der Hochachse des Gegenstandes wirkenden Beschleunigungskomponente ($a_z$),
**gekennzeichnet durch**
ein Differenzglied (26) zur Bestimmung der mit einer Drehwinkeländerung ($\Delta\alpha$) einhergehenden Änderung ($\Delta a_z$) der in Richtung der Hochachse wirksamen Beschleunigungskomponente und eine Recheneinheit (28), die aus der Drehwinkeländerung ($\Delta\alpha$) und lediglich der damit einhergehenden Änderung ($\Delta a_z$) der in Richtung der Hochachse wirksamen Beschleunigungskomponente den Absolutdrehwinkel ($\alpha$) des Gegenstandes berechnet.

4. Vorrichtung nach Anspruch 3, **dadurch gekennzeichnet, daß** zwischen dem Drehratensensor (2) und dem Integrator (22) ein Hochpaßfilter (20) angeordnet ist.

5. Vorrichtung nach Anspruch 3 oder 4,
**dadurch gekennzeichnet, daß** zwischen dem Beschleunigungssensor (4) und dem Differenzglied (26) ein Hochpaßfilter (24) angeordnet ist.

6. Vorrichtung nach einem der Ansprüche 3 bis 5, **dadurch gekennzeichnet, daß** die Recheneinheit (28) mit folgenden Formeln arbeitet:

$$\alpha = m \cdot (\Delta a_z - \Delta a_z^{\,0}),$$

wobei m = C3/$\Delta\alpha$, $\Delta a_z^{\,0}$ = 1-cos($\Delta\alpha$) und
C3 eine Konstante ist.

7. Vorrichtung nach Anspruch 6, **dadurch gekennzeichnet, daß** die Recheneinheit (28) entsprechened folgendem Ablauf arbeitet):

A) erfasse $\omega$(t) und $a_z$(t), wobei t = Zeit
B) bestimme

$$\Delta\alpha(T) = \int_0^T \omega(t)\,dt,$$

wobei T = Zeitintervall berechne $\Delta a_z = a_z(T) - a_z(0)$

C) wenn $\Delta\alpha < C1$, wobei C1 eine Konstante, oder

   $\Delta a_z > C2$, wobei C2 eine Konstante, gehe zu A

D) berechne

   $\alpha = m \cdot (\Delta a_z - \Delta a_z^0)$, wobei

   $m = C3/\Delta\alpha$, $\Delta a_z^0 = 1 - \cos(\Delta\alpha)$

   und C3 eine Konstante ist.

## Claims

1. Method for determining the absolute angle of rotation of an object that is rotating about an approximately horizontal rotational axis, in particular a motor vehicle rotating about its longitudinal axis, in which method a change $\Delta\alpha$ in the rotational angle of the object occurring during a time interval is determined and the acceleration component $a_z$ acting in the direction of the vertical axis of the object is determined, **characterized in that** the change $\Delta a_z$, occurring during the time interval, in the acceleration component acting in the direction of the vertical axis of the object is determined, and **in that** the absolute rotational angle $\alpha$ of the object is calculated from the change $\Delta\alpha$ in the rotational angle and merely the change $\Delta a_z$ in the acceleration component acting in the direction of the vertical axis of the object.

2. Method according to Claim 1, **characterized in that** the following formulas are used to calculate the absolute rotational angle $\alpha$:

$$\alpha = m \cdot (\Delta a_z - \alpha a_z^0),$$

where $m = C3/\Delta\alpha$, $\Delta a_z^0 = 1 - \cos(\Delta\alpha)$ and
C3 is a constant.

3. Device for determining the absolute rotational angle of an object that is rotating about an approximately horizontal rotational axis, in particular a motor vehicle rotating about its longitudinal axis, including a rate of rotation sensor (2) for detecting the angular velocity $\omega$ of the object rotating about the rotational axis, an integrator (22) for integrating the angular velocity and determining a change $\Delta\alpha$ in the angle of rotation, an acceleration sensor (4) for detecting the acceleration component $a_z$ acting in the direction of the vertical axis of the object, **characterized by** a difference element (26) for determining the change $\Delta a_z$, accompanying a change $\Delta\alpha$ in the angle of rotation, in the acceleration component acting in the direction of the vertical axis, and an arithmetic unit (28) that calculates the absolute angle of rotation $\alpha$ of the object from the change $(\Delta\alpha)$ in the angle of rotation and merely the change $\Delta a_z$, accompanying the latter, in the acceleration component acting in the direction of the vertical axis.

4. Device according to Claim 3, **characterized in that** a high-pass filter (20) is arranged between the rate of rotation sensor (2) and the integrator (22).

5. Device according to Claim 3 or 4, **characterized in that** a high-pass filter (24) is arranged between the acceleration sensor (4) and the difference element (26).

6. Device according to one of Claims 3 to 5, **characterized in that** the arithmetic unit (28) operates with the aid of the following formulas:

$$\alpha = m \cdot (\Delta a_z - \alpha a_z^0),$$

where $m = C3/\Delta\alpha$, $\Delta a_z^0 = 1 - \cos(\Delta\alpha)$ and

C3 is a constant.

7. Device according to Claim 6, **characterized in that** the arithmetic unit (28) operates in accordance with the following sequence):

A) detect $\omega(t)$ and $a_z(t)$, where t = time

B) determine

$$\Delta\alpha(T) \;=\; \int_0^T \omega(t)\,dt,$$

where T = a time interval
calculate $\Delta a_z = a_z(T) - a_z(0)$

C) if $\Delta\alpha < C1$, where C1 [lacuna] a constant, or
$\Delta a_z > C2$, where C2 [lacuna] a constant, go to A

D) calculate
$\alpha = m \cdot (\Delta a_z - \Delta a_z^0)$, where
$m = C3/\Delta\alpha$, $\Delta a_z^0 = 1 - \cos(\Delta\alpha)$
and C3 is a constant.

## Revendications

1. Procédé pour déterminer l'angle de rotation absolu d'un objet qui tourne autour d'un axe de rotation horizontal, en particulier d'un véhicule automobile qui tourne autour de son axe, dans lequel procédé une variation d'angle de rotation ($\Delta\alpha$) de l'objet qui se produit pendant un intervalle de temps est déterminée et la composante d'accélération ($a_z$) qui agit dans la direction de l'axe vertical de l'objet est déterminée
   **caractérisé en ce que**
   la variation ($\Delta a_z$), ayant lieu pendant l'intervalle de temps de la composante d'accélération qui agit selon la direction de l'axe vertical de l'objet est déterminée et
   **en ce que** l'angle de rotation absolu ($\alpha$) de l'objet est calculée à partir de la variation d'axe longitudinal ($\Delta\alpha$) et uniquement de la variation ($\Delta a_z$) de la composante d'accélération qui agit selon la direction de l'axe vertical de l'objet.

2. Procédé selon la revendication 1, **caractérisé en ce que**, pour le calcul de l'angle de rotation absolu ($\alpha$), on utilise les formules suivantes :

$$\alpha = m \cdot (\Delta a_z - \Delta a_z^0),$$

où $m = C3 / \Delta\alpha$, $\Delta a_z^0 = 1 - \cos(\Delta\alpha)$ et
C3 est une constante.

3. Dispositif pour déterminer l'angle de rotation absolu d'un objet qui tourne autour d'un axe de rotation horizontal, en particulier d'un véhicule automobile comprenant
   un capteur de taux de rotation (2) destiné à capter la vitesse angulaire ($\omega$) de l'objet qui tourne autour de l'angle de rotation, un intégrateur (22) destiné à intégrer la vitesse angulaire et à déterminer une variation de l'angle de rotation ($\Delta\alpha$),
   un capteur d'accélération (4) destiné à capter la composante d'accélération ($a_z$) qui agit selon la direction de l'axe vertical de l'objet,
   **caractérisé par**
   un organe différentiel (26) destiné à déterminer la composante d'accélération qui agit selon la direction de l'axe vertical de la variation ($\Delta a_z$) qui accompagne une variation ($\Delta\alpha$) de l'angle de rotation, et une unité de calcul (28) qui, à partir de la variation de l'angle de rotation ($\Delta\alpha$) et seulement de la variation concomitante ($\Delta a_z$) de la composante d'accélération de l'angle de rotation absolu ($\alpha$) de l'objet qui agit selon l'axe vertical.

**4.** Dispositif selon la revendication 3, **caractérisé en ce qu'**un filtre passe haut (20) est disposé entre le capteur de taux de rotation (2) et l'intégrateur (22).

**5.** Dispositif selon la revendication 3 ou 4, **caractérisé en ce qu'**un filtre passe haut (24) est disposé entre le capteur d'accélération (4) et l'organe différentiel (26).

**6.** Dispositif selon une des revendications 3 à 5, **caractérisé en ce que** l'unité de calcul (28) travaille avec les formules suivantes :

$$\alpha = m \cdot (\Delta a_z - \Delta a_z^0),$$

où $m = C3 / \Delta\alpha$, $\Delta a^0_z = 1 - \cos(\Delta\alpha)$ et
C3 est une constante.

**7.** Dispositif selon la revendication 6, **caractérisé en ce que** l'unité de calcul (28) travaille selon le déroulement suivant :

A) il capte $\omega(t)$ et $a_z(t)$, où t = temps

B) détermine

$$\Delta\alpha(T) = \int_0^T \omega(t)dt,$$

où T = intervalle de temps calcule $\Delta a_z = a_z(T) - a_z(0)$

C) si $\Delta\alpha < C1$, où C1 est une constante, où
$\Delta a_z > C2$, où C2 est une constante, il va vers A

D) calcule
$\alpha = m \cdot (\Delta a_z - \Delta a^0_z)$,
où $m = C3 / \Delta\alpha$, $\Delta a^0_z = 1 - \cos(\Delta\alpha)$
et C3 est une constante.

FIG 1

FIG 2

FIG 3

| Drehraten-sensor (Längsachse) [2] | → | Hochpass-filter [20] | $\omega(t)$ → | Integration $\Delta\alpha(T)$ [22] | → | Be-rechnung Absolut-winkel $\alpha$ [28] | → | Rollover Algo-rithmus [30] | → [32] |

Beschleuni-gungssensor (Hochachse) [4] → Hochpass-filter [24] → $a_z(t)$ → Differenz-bildung $\Delta\alpha_z$ [26] →

[6]

FIG 4

FIG 5

FIG 6